# FASCICULE DE BREVET EUROPEEN

(11) **EP 4 158 232 B1**
(45) Date de publication et mention de la délivrance du brevet: **19.03.2025**
(21) Numéro de dépôt: 21720799.2
(22) Date de dépôt: 25.03.2021
(51) Int. Cl.: F16L 27/093, F16L 41/00

(54) **RACCORD HYDRAULIQUE BANJO**
HYDRAULISCHE BANJOVERBINDUNG
HYDRAULIC BANJO COUPLING

(30) Priorité: 25.05.2020 FR 2005500
(43) Date de publication de la demande: 05.04.2023
(73) Titulaire: Stellantis Auto SAS, 78300 Poissy (FR)
(72) Inventeur: DESSARTHE, Stanislas, 62300 LENS (FR); ALLIEZ, Jean Jacques, 92210 ST CLOUD (FR); BROCHE, Eric, 92140 CLAMART (FR)
(74) Mandataire: PSIP
(86) Numéro de dépôt international: PCT/FR2021/050529
(87) Numéro de publication internationale: WO 2021/240078

(56) Documents cités:
- FR-A1- 2 891 890
- FR-A1- 2 933 763
- FR-A1- 3 058 201
- GB-A- 686 638

## Description

### Domaine technique de l'invention

L'invention relève du domaine des raccords hydrauliques de type banjo. Plus particulièrement, l'invention concerne un tel raccord banjo comprenant un manchon traversé axialement par un corps évidé et équipé de rondelles d'étanchéité qui sont axialement interfacées entre le manchon et des butées de prise d'appuis axialement antagonistes du corps évidé sur le manchon.

L'invention porte plus précisément sur les modalités de fixation des rondelles sur le manchon, les rondelles étant solidaires du manchon en étant immobilisées en rotation sur celui-ci.

### Art antérieur

Les raccords hydrauliques de type banjo permettent de raccorder entre eux deux conduits suivant des orientations concourantes, notamment perpendiculaires entre elles. Dans le domaine automobile, il est courant d'utiliser de tels raccords banjo pour le raccordement entre un circuit hydraulique équipant le véhicule et un conduit alimenté en fluide en provenance dudit circuit. Les raccords banjo sont couramment utilisés pour la distribution - depuis un circuit hydraulique du véhicule - d'un liquide de refroidissement ou d'un liquide de freinage par exemple.

Structurellement dans sa généralité, un raccord banjo comprend un manchon d'extension axiale qui est percé d'un alésage radial ménageant un premier canal via lequel le manchon est raccordable hydrauliquement à un premier conduit participant du circuit hydraulique. Le manchon loge à l'intérieur de son évidement axial un corps partiellement évidé axialement, qui est aussi percé d'un alésage radial ménageant un deuxième canal de jonction hydraulique entre le premier canal et l'évidement du corps qui est raccordable à un deuxième conduit.

Le liquide en provenance du circuit hydraulique peut ainsi - via le premier conduit raccordé au premier canal - être introduit radialement vers l'intérieur du manchon, puis circuler radialement à travers le deuxième canal vers l'évidement axial du corps évidé, puis circuler axialement à travers l'évidement du corps évidé en vue de sa distribution hors du raccord banjo vers le deuxième conduit.

Pour procurer l'assemblage entre le corps évidé et le manchon, le corps évidé est couramment formé d'un organe fileté, tel que notamment agencé en vis ou en boulon. Ceci permet d'introduire le corps évidé axialement à l'intérieur du manchon et de le maintenir en position par serrage axial sur le manchon, via des butées de prise d'appuis axialement antagonistes du corps évidé sur le manchon.

Par exemple selon diverses variantes, une première butée peut être formée par une tête ou un épaulement de l'organe fileté, ou encore par un premier écrou coopérant avec l'organe fileté. Une deuxième butée peut être agencée en un deuxième écrou ou en une paroi d'un support du raccord banjo sur lequel il est fixé - support pouvant avantageusement inclure le deuxième conduit - ledit support étant pourvu d'un passage fileté coopérant avec l'organe fileté.

Pour procurer une jonction étanche entre le corps évidé et le manchon, des rondelles d'étanchéité sont interposées axialement entre les faces axialement opposées des extrémités axiales du manchon et respectivement les butées. De telles rondelles d'étanchéité sont couramment issues d'un matériau métallique, notamment à base de cuivre ou d'aluminium. Par suite du serrage axial du corps évidé sur le manchon, les rondelles sont comprimées entre les butées et les faces d'extrémités axiales du manchon, en procurant l'étanchéité à obtenir entre eux.

Il est apparu opportun d'équiper en atelier le manchon avec les rondelles, de sorte que le manchon et les rondelles forment un composant monobloc pouvant être transporté vers un site d'assemblage du raccord banjo et/ou de montage du raccord banjo sur un véhicule automobile. Il est aussi apparu opportun d'interdire une mise en rotation des rondelles lors de l'assemblage par serrage axial du manchon par le corps évidé, une telle mise en rotation des rondelles pouvant altérer l'étanchéité obtenue entre le manchon et les butées.

A cet effet il est par exemple connu par le document US7226088-B2 (DAYCO PRODUCTS LLC), d'assembler les rondelles entre elles par un lien en formant un corps monobloc configuré en une attache élastiquement déformable. L'attache est solidaire du manchon en entourant la paroi extérieure du manchon qu'elle ceinture partiellement. En outre, l'attache prend appui contre des faces latérales planes du manchon, via des plaquettes intégrées au lien. Ceci permet d'interdire une mise en rotation de l'attache sur le manchon pour son maintien en position, notamment lors de l'assemblage entre l'organe évidé et le manchon constitutifs du raccord banjo décrit dans ce document.

Une telle solution présente cependant plusieurs inconvénients.

Par exemple, la fixation obtenue des rondelles sur le manchon présente un risque de perte de fiabilité, notamment en raison du caractère élastiquement déformable de l'attache. Notamment encore, l'installation de l'attache en périphérie du manchon et/ou les modalités d'immobilisation en rotation des rondelles sur le manchon exposent l'attache à un risque de retrait ou de rupture indésirables par rapport au manchon lors de la manipulation dudit corps monobloc et/ou du raccord banjo lui-même.

Par exemple encore, l'installation des rondelles via l'attache sur le manchon est contraignante et/ou est délicate à réaliser dans le cadre d'une production automatisée en série, ce qui affecte la compétitivité économique du raccord banjo.

En outre, la présence de l'attache accroît l'encombrement hors tout du raccord banjo et rend sa manipulation délicate lors de son installation sur un véhicule automobile, dans un environnement du véhicule réputé encombré, notamment en phase terminale d'assemblage du véhicule sur une chaîne de montage et/ou lors d'une opération de maintenance.

Par exemple encore lors d'une opération de maintenance, la solidarisation des rondelles l'une à l'autre via l'attache complexifie le remplacement des rondelles en cas d'usure.

On connait encore du document FR2933763A1 un raccord banjo correspondant au préambule de la revendication 1.

### Présentation de l'invention

Dans ce contexte, la présente invention a pour objet un raccord banjo muni de rondelles qui sont axialement interfacées entre un manchon et un corps partiellement évidé s'étendant axialement à l'intérieur du manchon.

Le but de l'invention est de proposer un tel raccord banjo dans lequel les rondelles sont fixées au manchon en étant immobilisées en rotation. Il est aussi visé de faciliter la maintenance du raccord, notamment au regard de son démontage et son remontage pour permettre un remplacement aisé et rapide des rondelles en cas d'usure.

Sur la base du constat qui vient d'être fait et qui relève de la démarche menée pour aboutir à l'invention, il est notamment visé par l'invention de rechercher une solution au moins palliant en tout ou partie aux inconvénients qui viennent d'être présentés.

Un tel but s'inscrit notamment sous contrainte d'une recherche de réduction des coûts liés à la compétitivité du raccord banjo obtenu, dans le contexte d'une concurrence économique sévère dans le domaine automobile pouvant rendre rédhibitoire une solution potentielle en raison des coûts induits.

Un raccord banjo relevant de l'invention est du type de raccord hydraulique comprenant un manchon recevant axialement un corps évidé dont l'évidement débouche à l'une quelconque des extrémités axiales du raccord banjo. Le manchon est pourvu d'un premier canal radial placé en communication hydraulique avec l'évidement du corps évidé via un deuxième canal radial dont est pourvu le corps évidé. Le corps évidé enserre axialement le manchon entre des butées prenant des appuis axialement antagonistes contre respectivement les faces d'extrémité axiale du manchon. Des rondelles d'étanchéité sont axialement interfacées entre le manchon et respectivement lesdites butées, en étant fixées et immobilisées en rotation sur le manchon.

Par la suite les notions relatives axiale et radiale sont considérées au regard des directions - ou orientation générale - d'extension du manchon qui sont identifiées par rapport à son axe d'extension.

Pour chacune des rondelles, la rondelle est individuellement fixée au manchon par emboîtement étroit d'au moins un relief intégré à la rondelle à l'intérieur d'un logement ménagé dans la face d'extrémité axiale du manchon qui est orientée vers la rondelle. Selon l'invention, et suivant un plan orienté radialement, chacun des logements recevant un dit relief présente un profil sensiblement polygonal.

Il est compris que ledit relief, coopérant par emboîtement étroit - ou autrement dit par emboîtement dur ou serré - avec le logement, est ménagé à la face de la rondelle qui est orientée vers la face d'extrémité axiale du manchon comportant le logement de réception dudit relief.

Avantageusement selon une forme de réalisation et pour chacune des rondelles, la rondelle est en outre individuellement immobilisée en rotation sur le manchon par prise d'appui du relief contre des parois latérales du logement qui s'étendent suivant un plan orienté axialement.

Plus spécifiquement encore et suivant un plan d'extension axiale, le profil de chacun des logements recevant un dit relief est conformé en trapèze.

De préférence, chacune des rondelles est pourvue d'au moins deux dits reliefs qui sont angulairement équirépartis sur la rondelle en étant logés à l'intérieur de dits logements qui leurs sont respectivement affectés.

Selon une forme de réalisation, chacune des rondelles est pourvue d'au moins deux languettes équiréparties sur la rondelle. Les languettes sont rabattues contre la face extérieure d'une paroi périphérique d'orientation axiale du manchon.

De préférence, les languettes s'étendent respectivement en prolongement de dits reliefs en pluralité que comporte la rondelle.

Selon une forme de réalisation, ledit au moins un relief est formé d'un refoulement de la matière constitutive de la rondelle vers l'intérieur du logement qui le reçoit. Un tel refoulement de matière résulte notamment d'un aplatissement localisé de la rondelle vers l'intérieur du logement recevant le relief, provoquant l'emboîtement étroit du relief à l'intérieur du logement.

Plus spécifiquement, lesdits reliefs en pluralité sont formés d'un écrasement de la matière constitutive de la languette qui les prolonge.

L'assemblage entre le manchon et les rondelles peut être avantageusement réalisé en atelier au moyen d'un outil de pressage localisé des rondelles contre les faces d'extrémité axiale respectives du manchon pourvues des logements. L'outil de pressage forme les reliefs par écrasements localisés de la matière des rondelles vers l'intérieur des logements, les logements formant alors des matrices de réception du fluage de la matière des rondelles soumises à déformation par suite de leurs écrasements localisés.

L'invention a aussi pour objet un véhicule automobile équipé d'au moins un raccord banjo conforme à l'invention. Le raccord banjo est typiquement greffé sur un circuit hydraulique du véhicule via un premier conduit raccordé audit premier canal que comporte le manchon et via un deuxième conduit raccordé à l'évidement du corps évidé. Selon diverses applications potentielles, le circuit hydraulique est par exemple un circuit acheminant un liquide de refroidissement, un liquide de freinage ou encore un lubrifiant.

### Présentation des figures

L'invention sera mieux comprise à la lecture de la description détaillée qui suit d'un exemple de réalisation de la présente invention, en relation avec les figures suivantes :
[Fig. 1] La figure 1 est une illustration schématique en coupe axiale d'un raccord banjo selon une forme de réalisation de l'invention.
[Fig. 2] La figure 2 est une illustration d'un manchon axial que comporte le raccord banjo représenté sur la figure 1, d'une part en vue de bout suivant l'une quelconque de ses extrémités axiales et d'autre part partiellement selon une section A-A considérée suivant un plan de coupe orienté suivant l'extension axiale du manchon.
[Fig. 3] La figure 3 est un schéma illustrant pour exemple des modalités avantageuses de solidarisation de rondelles d'étanchéité aux extrémités axiales du manchon que comprend le raccord banjo illustré sur la figure 1.

### Description détaillée de l'invention

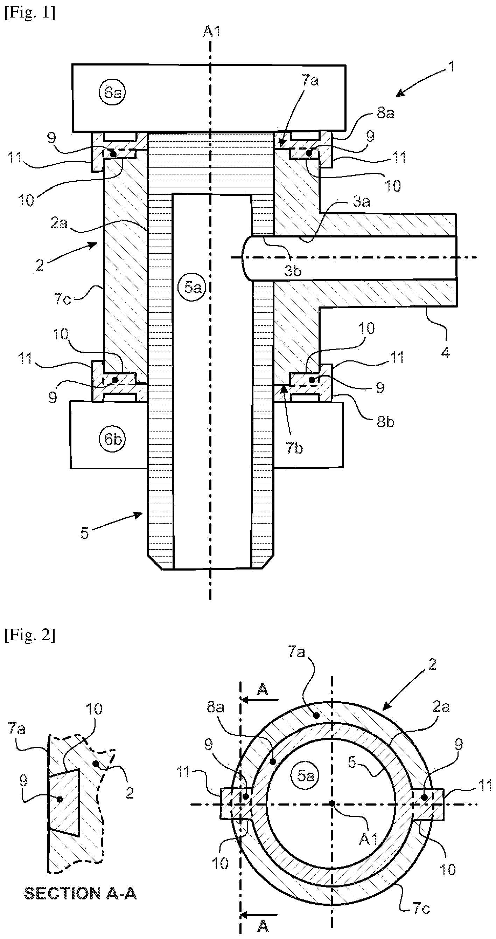

Les figures et leurs descriptions détaillées non limitatives, exposent l'invention selon des modalités particulières qui ne sont pas restrictives quant à la portée de l'invention. Les figures et leurs descriptions détaillées d'un exemple de réalisation de l'invention peuvent servir à mieux la définir, si besoin en relation avec la description générale qui vient d'en être faite. Par ailleurs pour éviter une surcharge des figures et ainsi faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures. Sur la figure 1, un raccord hydraulique de type communément désigné par banjo est configuré pour raccorder entre eux deux conduits suivant des orientations concourantes, notamment perpendiculaires entre elles. Un tel raccord banjo 1 est notamment utilisé dans le domaine automobile, pour équiper un ou plusieurs circuits hydrauliques du véhicule, tel que par exemple un circuit hydraulique acheminant un liquide de refroidissement, un circuit hydraulique acheminant un liquide de freinage, ou encore un circuit hydraulique acheminant un lubrifiant.

Dans sa généralité, un raccord banjo 1 comprend un manchon 2 d'extension axiale A1 pourvu d'un premier canal 3a d'admission d'un fluide à l'intérieur du raccord banjo 1. Le premier canal 3a est notamment formé d'un alésage ménagé radialement à travers la paroi périphérique du manchon 2. Le premier canal 3a est potentiellement prolongé par un embout 4 de raccordement du manchon 2 à un conduit d'admission d'un fluide depuis le circuit hydraulique.

Le raccord banjo 1 comprend aussi un corps évidé 5 partiellement suivant l'extension axiale A1 du raccord banjo 1. Le corps évidé 5 est axialement introduit à l'intérieur de l'évidement 2a du manchon 2, en étant fermé à l'une de ses extrémités axiales et en étant ouvert à l'autre de ses extrémités axiales. Le corps évidé 5 est aussi pourvu d'un deuxième canal 3b d'admission à l'intérieur de son évidement 5a du fluide en provenance du manchon 2.

Le deuxième canal 3b est ménagé en prolongement radial du premier canal 3a. Le fluide admis à l'intérieur du manchon 2 via le premier canal 3a, peut circuler à l'intérieur du deuxième canal 3b puis à l'intérieur de l'évidement 5a du corps évidé 5, et être évacué hors du raccord banjo 1 pour sa distribution.

Des butées 6a, 6b prennent des appuis axialement antagonistes contre respectivement les faces 7a, 7b d'extrémité axiale du manchon 2. Selon l'exemple illustré, le corps évidé 5 est agencé en un organe fileté, tel qu'une vis par exemple, dont la tête forme une première butée 6a prenant axialement appui contre une première face 7a d'extrémité axiale du manchon 2. Une deuxième butée 6b est formée d'un écrou coopérant avec la vis en prenant axialement appui contre une deuxième face 7b d'extrémité axiale du manchon 2.

Le corps évidé 5 enserre ainsi axialement le manchon 2 entre la tête de vis et l'écrou respectivement constitutifs des butées 6a, 6b. Pour conférer au raccord banjo 1 une étanchéité satisfaisante, des rondelles 8a, 8b d'étanchéité sont interposées axialement entre les faces 7a, 7b d'extrémité axiale du manchon 2 et respectivement les butées 6a, 6b.

En se reportant aussi à la figure 2, chacune des rondelles 8a, 8b intègre des reliefs 9 pour sa fixation au manchon 2. Les reliefs 9 sont introduits en force à l'intérieur de logements 10 qui leurs sont affectés et qui sont ménagés aux faces 7a, 7b d'extrémité axiale respectives du manchon 2. Les reliefs 9 et les logements 10 qui les reçoivent s'étendent suivant l'orientation axiale d'extension du manchon 2, et s'étendent radialement vers la paroi périphérique d'extension axiale du manchon 2.

Les reliefs 9 et les logements 10 qui les reçoivent forment ainsi des organes de fixation 9,10 des rondelles 8a, 8b aux faces 7a, 7b d'extrémité axiale du manchon 2, en coopérant entre eux par emboîtement étroit ou autrement dit par emboîtement dur. Ceci procure une solidarisation ferme entre les rondelles 8a, 8b et le corps du manchon 2, les rondelles 8a, 8b étant individuellement fixées au manchon 2 à ses faces 7a, 7b d'extrémités axiale en formant un ensemble monobloc manipulable en un tout.

Chacune des rondelles 8a, 8b est pourvue de plusieurs reliefs 9 individuellement introduits dans des logements 10 qui leurs sont affectés, en étant équirépartis angulairement sur la rondelle 8a, 8b. Selon l'exemple illustré et pour chacune des rondelles 8a, 8b, les reliefs 9 et les logements 10 qui les reçoivent sont au nombre de deux, les deux jeux de relief 9 et logement 10 coopérants par emboîtement étant disposés sur le manchon diamétralement à l'opposé l'un de l'autre.

Sur la figure 2, les logements 10 présentent un profil radial sensiblement polygonal - quadrilatère notamment - suivant un plan orienté radialement comme visible sur la vue de bout illustrée du manchon 2. Par ailleurs suivant un plan d'extension axiale, les profils axiaux des logements 10 sont conformés en trapèze, comme visible sur la section A-A illustrée du manchon 2. La formation en trapèze des profils axiaux des logements 10 permettent de conforter l'interdiction d'un retrait spontané des rondelles 8a, 8b en interdisant une échappée des reliefs 9 hors des logements 10.

Les rondelles 8a, 8b sont immobilisées en rotation sur le manchon 2, pour éviter un risque de fuite pouvant résulter d'une mise en rotation des rondelles 8a, 8b par suite d'un entraînement en rotation de l'organe fileté formant le corps évidé 5. Outre la solidarisation obtenue entre le manchon 2 et les rondelles 8a, 8b par suite de l'emboîtement étroit des reliefs 9 à l'intérieur des logements 10, l'immobilisation en rotation des rondelles 8a, 8b est confortée par la prise d'appui des reliefs 9 contre les parois latérales des logements 10 qui s'étendent suivant un plan d'extension axiale et sensiblement radiale du manchon 2.

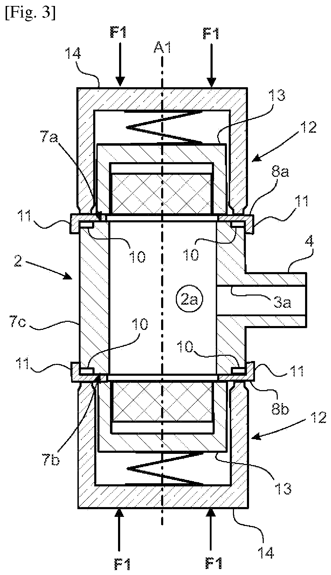

Par ailleurs, les rondelles 8a, 8b sont pourvues de languettes 11 pour leur positionnement radial en appui contre les faces 7a, 7b d'extrémité axiale du manchon 2. Les languettes 11 sont ménagées en prolongement radial des reliefs 9 vers l'extérieur du manchon 2, et sont rabattues contre la face 7c extérieure de la paroi périphérique axiale du manchon 2. De telles languettes 11 sont notamment utilisées pour centrer les rondelles 8a, 8b sur le manchon 2 lors de la formation des reliefs 9, par déformation de matière des rondelles 8a, 8b et plus spécifiquement des languettes 11 comme illustré sur la figure 3.

Selon d'autres variantes de réalisation, le centrage des rondelles 8a, 8b peut aussi être réalisé via la face intérieure axiale de l'évidement du manchon 2 ou encore en combinaison via sa la face extérieure de la paroi périphérique axiale du manchon 2 et via la face intérieure axiale de l'évidement du manchon 2.

Sur la figure 3, les rondelles 8a, 8b sont fixées au manchon 2 par sertissage des languettes 11 à sa paroi périphérique axiale, permettant de positionner les rondelles 8a, 8b contre les faces 7a, 7b d'extrémités axiales du manchon 2. Le manchon 2 muni des rondelles 8a, 8b est ensuite placé dans un outillage 12 pour former les reliefs 9 par refoulement de la matière des rondelles 8a, 8b vers l'intérieur des logements 10 qui leurs sont affectés.

Les rondelles 8a, 8b sont chacune maintenues appliquées contre les faces 7a, 7b d'extrémité axiale du manchon 2 par une presse 13. Puis un outil 14 à presser est appliqué en force F1 contre les languettes 11 dans leur zone de recouvrement des faces 7a, 7b d'extrémité axiale du manchon 2. Ceci a pour effet de provoquer un fluage de la matière des rondelles 8a, 8b vers l'intérieur des logements 10, et plus spécifiquement de la matière constitutive des languettes 11 intégrées aux rondelles 8a, 8b, en formant les reliefs 9 qui se trouvent alors encastrés à l'intérieur des logements 10.

## Revendications

1. Raccord banjo (1) comprenant un manchon (2) recevant axialement (A1) un corps évidé (5) dont l'évidement (5a) débouche à l'une quelconque des extrémités axiales du raccord banjo (1), le manchon (2) étant pourvu d'un premier canal (3a) radial placé en communication hydraulique avec l'évidement (5a) du corps évidé (5) via un deuxième canal (3b) radial dont est pourvu le corps évidé (5), le corps évidé (5) enserrant axialement le manchon (2) entre des butées (6a, 6b) prenant des appuis axialement antagonistes contre respectivement les faces (7a, 7b) d'extrémité axiale du manchon (2), des rondelles (8a, 8b) d'étanchéité étant axialement interfacées entre le manchon (2) et respectivement lesdites butées (6a, 6b) en étant fixées et immobilisées en rotation sur le manchon (2), pour chacune des rondelles (8a, 8b), la rondelle (8a, 8b) étant individuellement fixée au manchon (2) par emboîtement étroit d'au moins un relief (9) intégré à la rondelle (8a, 8b) à l'intérieur d'un logement (10) ménagé dans la face (7a, 7b) d'extrémité axiale du manchon (2) qui est orientée vers la rondelle (8a, 8b), **caractérisé en ce que** suivant un plan orienté radialement, chacun des logements (10) recevant un dit relief (9) présente un profil sensiblement polygonal.

2. Raccord banjo (1) selon la revendication 1, **caractérisé en ce que** pour chacune des rondelles (8a, 8b), la rondelle (8a, 8b) est individuellement immobilisée en rotation sur le manchon (2) par prise d'appui du relief (9) contre des parois latérales du logement (10) qui s'étendent suivant un plan orienté axialement.

3. Raccord banjo (1) selon l'une quelconque des revendications 1 à 2, **caractérisé en ce que** suivant un plan d'extension axiale, le profil de chacun des logements (10) recevant un dit relief (9) est conformé en trapèze.

4. Raccord banjo (1) selon l'une quelconque des revendications 1 à 3, **caractérisé en ce que** chacune des rondelles (8a, 8b) est pourvue d'au moins deux dits reliefs (9) qui sont angulairement équirépartis sur la rondelle (8a, 8b) en étant logés à l'intérieur de dits logements (10) qui leurs sont respectivement affectés.

5. Raccord banjo (1) selon l'une quelconque des revendications 1 à 4, **caractérisé en ce que** chacune des rondelles (8a, 8b) est pourvue d'au moins deux languettes (11) angulairement équiréparties sur la rondelle (8a, 8b), les languettes (11) étant rabattues contre la face (7c) extérieure d'une paroi périphérique d'orientation axiale du manchon (2).

6. Raccord banjo (1) selon les revendications 4 et 5, **caractérisé en ce que** les languettes (11) s'étendent respectivement en prolongement de dits reliefs (9) en pluralité que comporte la rondelle (8a, 8b).

7. Raccord banjo (1) selon l'une quelconque des revendications 1 à 6, **caractérisé en ce que** ledit au moins un relief (9) est formé d'un refoulement de la matière constitutive de la rondelle (8a, 8b) vers l'intérieur du logement (10) qui le reçoit.

8. Raccord banjo (1) selon les revendications 6 et 7, **caractérisé en ce que** lesdits reliefs (9) en pluralité sont formés d'un écrasement de la matière constitutive de la languette (11) qui les prolonge.

9. Véhicule automobile **caractérisé en ce qu'**il est équipé d'au moins un raccord banjo (1) selon l'une quelconque des revendications 1 à 8.

## Patentansprüche

1. Hohlverschraubung (1) umfassend eine Hülse (2), die einen hohlen Körper (5) axial aufnimmt (A1), dessen Aussparung (5a) sich an einem der axialen Enden der Hohlverschraubung (1) öffnet, wobei die Hülse (2) vorgesehen ist mit eingelegtem ersten Radialkanal (3a).
Verbindung mit der Aussparung (5a) des Hohlkörpers (5) über einen zweiten Radialkanal (3b), mit dem der Hohlkörper (5) versehen ist, wobei der Hohlkörper (5) die Hülse axial umschließt (2) zwischen Anschlägen (6a, 6b), die axial antagonistische Stützen gegen jeweils die Flächen (7a, 7b) des axialen Endes der Hülse (2) nehmen, die Unterlegscheiben (8a, 8b) wobei die Dichtung axial zwischen der Hülse (2) und der jeweiligen Hülse (2) angeordnet ist Anschläge (6a, 6b) sind für jede der Unterlegscheiben (8a, 8b) an der Hülse (2) befestigt und drehfest fixiert, wobei die Unterlegscheiben (8a, 8b) einzeln durch enges Ineinandergreifen an der Hülse (2) befestigt sind mindestens eine in die Unterlegscheibe (8a, 8b) integrierte Aussparung (9) innerhalb einer in der Stirnfläche (7a, 7b) vorgesehenen Aufnahme (10) axiales Ende der Hülse (2), das zur Unterlegscheibe (8a, 8b) orientiert ist, **dadurch gekennzeichnet, dass** es einer orientierten Ebene folgt radial weist jedes der Gehäuse (10), das das Relief (9) aufnimmt, ein im Wesentlichen polygonales Profil auf.

2. Hohlverschraubung (1) nach Anspruch 1, **dadurch gekennzeichnet, dass** für jede der Unterlegscheiben (8a, 8b) die Unterlegscheibe (8a, 8b) individuell auf der Hülse (2) drehfest fixiert ist, indem sie sich gegen die Aussparung (9) abstützt die Seitenwände des Gehäuses (10), die erstrecken sich entlang einer axial ausgerichteten Ebene.

3. Hohlverschraubung (1) nach einem der Ansprüche 1 bis 2, **dadurch gekennzeichnet, dass** das Profil jedes der Aufnahmen (10), die das Relief (9) aufnehmen, entlang einer axialen Erstreckungsebene trapezförmig ist.

4. Banjo-Verbindung (1) nach einem der Ansprüche 1 bis 3, **dadurch gekennzeichnet** jede der Unterlegscheiben (8a, 8b) mit mindestens zwei besagten Reliefs (9) versehen ist winkelmäßig gleichmäßig auf der Unterlegscheibe (8a, 8b) verteilt und in den ihnen jeweils zugeordneten Gehäusen (10) untergebracht sind.

5. Banjo-Verbindung (1) nach einem der Ansprüche 1 bis 4, **dadurch gekennzeichnet, dass** jede der Unterlegscheiben (8a, 8b) mit mindestens zwei winkelförmigen Laschen (11) versehen ist gleichmäßig auf der Unterlegscheibe (8a, 8b) verteilt , wobei die Zungen (11) gegen die Außenfläche (7c) einer axial ausgerichteten Umfangswand der Hülse (2) gefaltet sind .

6. Banjo-Verbindung (1) nach den Ansprüchen 4 und 5, **dadurch gekennzeichnet, dass** sich die Zungen (11) jeweils in Verlängerung der mehreren Reliefs (9) erstrecken, die die Unterlegscheibe (8a, 8b) umfasst.

7. Banjo-Verbindung (1) nach einem der Ansprüche 1 bis 6, **dadurch gekennzeichnet** das mindestens eine Relief (9) durch eine Verschiebung des Materials, aus dem die Unterlegscheibe (8a, 8b) besteht, in Richtung des Inneren des Gehäuses (10), das es aufnimmt, gebildet wird.

8. Banjo-Anschluss (1) nach den Ansprüchen 6 und 7, **dadurch gekennzeichnet, dass** die mehreren Reliefs (9) durch Zerkleinern des Materials gebildet werden, aus dem die Zunge (11) besteht sie .

9. Kraftfahrzeug, **dadurch gekennzeichnet, dass** es mit mindestens einer Hohlverschraubung (1) nach einem der Ansprüche 1 bis 8 ausgestattet ist.

## Claims

1. Banjo fitting (1) comprising a sleeve (2) axially receiving (A1) a hollow body (5) whose recess (5a) opens at any one of the axial ends of the banjo fitting (1), the sleeve (2) being provided with a first radial channel (3a) placed in communication with the recess (5a) of the hollowed-out body (5) via a second radial channel (3b) with which the hollowed-out body (5) is provided, the hollowed-out body (5) axially enclosing the sleeve (2) between stops (6a, 6b) taking axially antagonistic supports against respectively the axial end faces (7a, 7b) of the sleeve (2), sealing washers (8a, 8b) being axially interfaced between the sleeve (2) and respectively said stops (6a, 6b) being fixed and immobilized in rotation on the sleeve (2), for
each of the washers (8a, 8b), the washer (8a, 8b) being individually fixed to the sleeve (2) by close fitting of at least one relief (9) integrated into the washer (8a, 8b) inside a housing (10) formed in the axial end face (7a, 7b) of the sleeve (2) which is oriented towards the washer (8a, 8b), **characterized in that** according to a plane oriented radially , each of the housings (10) receiving a said relief (9) has a substantially polygonal profile.

2. Banjo fitting (1) according to claim 1, **characterized in that** for each of the washers (8a, 8b), the washer (8a, 8b) is individually immobilized in rotation on the sleeve (2) by the relief (9) bearing against side walls of the housing (10) which extend along an axially oriented plane.

3. Banjo fitting (1) according to any one of claims 1 to 2, **characterized in that** along an axial extension plane, the profile of each of the housings (10) receiving a said relief (9) is shaped like a trapezium.

4. Banjo fitting (1) according to any one of claims 1 to 3, **characterized in that** each of the washers (8a, 8b) is provided with at least two said reliefs (9) which are angularly equidistributed on the washer (8a, 8b) while being housed inside said housings (10) which are respectively assigned to them.

5. Banjo fitting (1) according to any one of claims 1 to 4, **characterized in that** each of the washers (8a, 8b) is provided with at least two angularly extending tabs (11) equally distributed on the washer (8a, 8b), the tabs (11) being folded against the outer face (7c) of an axially oriented peripheral wall of the sleeve (2).

6. Banjo fitting (1) according to claims 4 and 5, **characterized in that** the tabs (11) extend respectively as an extension of said plurality of reliefs (9) included in the washer (8a, 8b).

7. Banjo fitting (1) according to any one of claims 1 to 6, **characterized in that** said at least one relief (9) is formed by a displacement of the constituent material of the washer (8a, 8b) towards the inside of the housing (10) which receives it.

8. Banjo fitting (1) according to claims 6 and 7, **characterized in that** said reliefs (9) in plurality are formed by a crushing of the constituent material of the tab (11) which them .

9. Motor vehicle **characterized in that** it is equipped with at least one banjo fitting (1) according to any one of claims 1 to 8.
